# EUROPEAN PATENT APPLICATION

(11) **EP 2 725 233 A1**
(43) Date of publication of application: **30.04.2014**
(21) Application number: 13186927.3
(22) Date of filing: 01.10.2013
(51) Int. Cl.: F04D 27/00, F04D 29/32, F04D 29/68, F01D 5/14

(54) **Rotor blade for a compressor**

(30) Priority: 26.10.2012 US 201213662287
(71) Applicant: Honeywell International Inc., Morristown, NJ 07962-2245 (US)
(72) Inventor: Goswami, Shraman Narayan, Morristown, NJ New Jersey 07962-2245 (US); Kasal, Yathiraj, Morristown, NJ New Jersey 07962-2245 (US)
(74) Representative: Houghton, Mark Phillip

(57) **Abstract**

A rotor blade for a compressor includes a pressure sidewall; a suction sidewall coupled to the pressure sidewall at a leading edge and a trailing edge; and a through hole extending between the pressure sidewall and the suction sidewall.

## Description

### TECHNICAL FIELD

The present invention generally relates to gas turbine engines and more particularly relates to improved compressor blades for increasing stall margin in gas turbine engines.

### BACKGROUND

Gas turbine engines are used in a wide range of applications, such as aircraft engines and auxiliary power units. In a gas turbine engine, air is compressed in a compressor section and mixed with fuel and ignited in a combustor section to generate hot combustion gases. The hot combustion gases are delivered to a turbine section in which rotor assemblies are driven by the combustion gases to provide an engine output.

In some engines, the compressor section is implemented with one or more axial and/or centrifugal compressors. A compressor typically includes at least one rotor blade that is rotationally mounted on a hub within a casing. From an efficiency perspective, it is generally advantageous to operate the engine with as high a pressure as possible. However, in some conventional engines, operating at high pressures may increase the likelihood of a stall condition. Engine stall is a phenomenon that occurs as a result of certain engine operating conditions and, if not properly addressed, may adversely impact engine performance and durability. Other causes of engine stall may include overpressurization or flow distortions in areas upstream or downstream of the rotors. In many conventional systems, the compressor may operate in a less than optimally efficient manner to maintain adequate stall margin.

Accordingly, it is desirable to provide improved compressors that increase the stall margin while not adversely affecting engine performance. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with an exemplary embodiment, a rotor blade for a compressor includes a pressure sidewall; a suction sidewall coupled to the pressure sidewall at a leading edge and a trailing edge; and a through hole extending between the pressure sidewall and the suction sidewall.

In accordance with another exemplary embodiment, a compressor for a gas turbine engine includes a rotor platform and a rotor blade extending radially outwardly from the rotor platform. The rotor blade further includes a pressure sidewall and a circumferentially opposing suction sidewall extending in a radial direction between a root and a tip and in an axial direction between a leading edge and a trailing edge. The rotor blade includes a through hole extending between the pressure sidewall and the suction sidewall. The compressor includes a casing having an inner surface surrounding the tip. The casing and the rotor platform define a primary air flow path therebetween to direct a primary air flow in a downstream direction.

### BRIEF DESCRIPTION OF THE DRAWINGS

The present invention will hereinafter be described in conjunction with the following drawing figures, wherein like numerals denote like elements, and

FIG. 1 is a cross-sectional view of a gas turbine engine in accordance with an exemplary embodiment;

FIG. 2 is a partial cross-sectional side view of a compressor section of the gas turbine engine of FIG. 1 in accordance with an exemplary embodiment;

FIG. 3 is a first side view of a compressor blade of the compressor section of FIG. 2 in accordance with an exemplary embodiment;

FIG. 4 is a second side view of a compressor blade of the compressor section of FIG. 2 in accordance with an exemplary embodiment; and

FIG. 5 is a partial, more detailed view of the compressor blade of FIGS. 3 and 4 in accordance with an exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Broadly, exemplary embodiments discussed herein include gas turbine engines with improved compressor sections. For example, the compressor section may include one or more compressors having rotor blades through holes extending between the pressure sidewall and the suction sidewall. During operation, air may be bled from the pressure sidewall and delivered by the hole to the suction sidewall. Such air may be used to energize the primary air flowing over the suction sidewall, thereby preventing or mitigating boundary layer separation. Preventing or mitigating boundary layer separation may inhibit the formation of vortices and other flow distortions, thereby increasing stall margin.

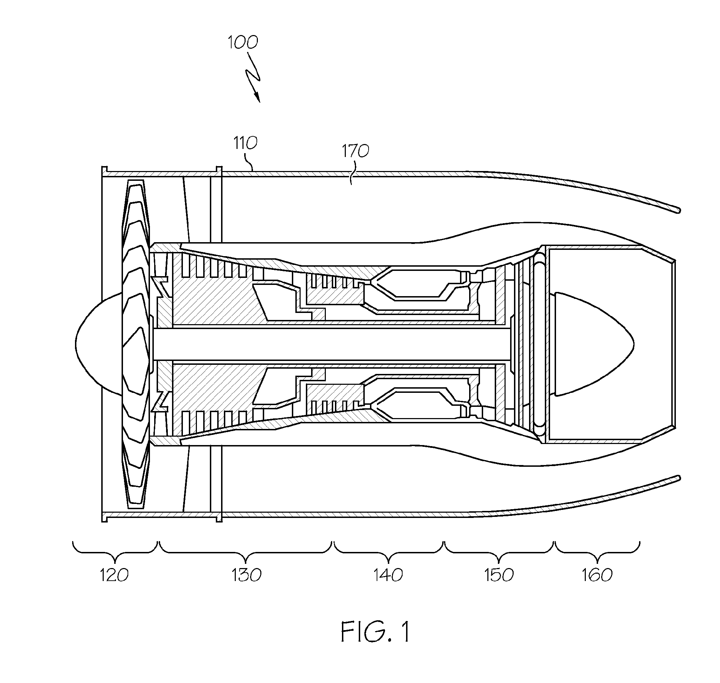

FIG. 1 is a cross-sectional view of a gas turbine engine 100 according to an exemplary embodiment. Although FIG. 1 depicts a turbofan engine, in general, exemplary embodiments discussed herein may be applicable to any type of engine, including turboshaft engines. The gas turbine engine 100 may form part of, for example, an auxiliary power unit for an aircraft or a propulsion system for an aircraft. The gas turbine engine 100 has an overall construction and operation that is generally understood by persons skilled in the art. The gas turbine engine 100 may be disposed in an engine case 110 and may include a fan section 120, a compressor section 130, a combustion section 140, a turbine section 150, and an exhaust section 160. The fan section 120 may include a fan, which draws in and accelerates air. A fraction of the accelerated air from the fan section 120 is directed through a bypass section 170 to provide a forward thrust. The remaining fraction of air exhausted from the fan is directed into the compressor section 130.

As described in further detail below, the compressor section 130 may include a series of compressors that raise the pressure of the air directed into it from the fan section 120. The compressors may direct the compressed air into the combustion section 140. In the combustion section 140, the high pressure air is mixed with fuel and combusted. The combusted air is then directed into the turbine section 150. The turbine section 150 may include a series of rotor and stator assemblies disposed in axial flow series. The combusted air from the combustion section 140 expands through the rotor and stator assemblies and causes the rotor assemblies to rotate a main engine shaft for energy extraction. The air is then exhausted through a propulsion nozzle disposed in the exhaust section 160 to provide additional forward thrust.

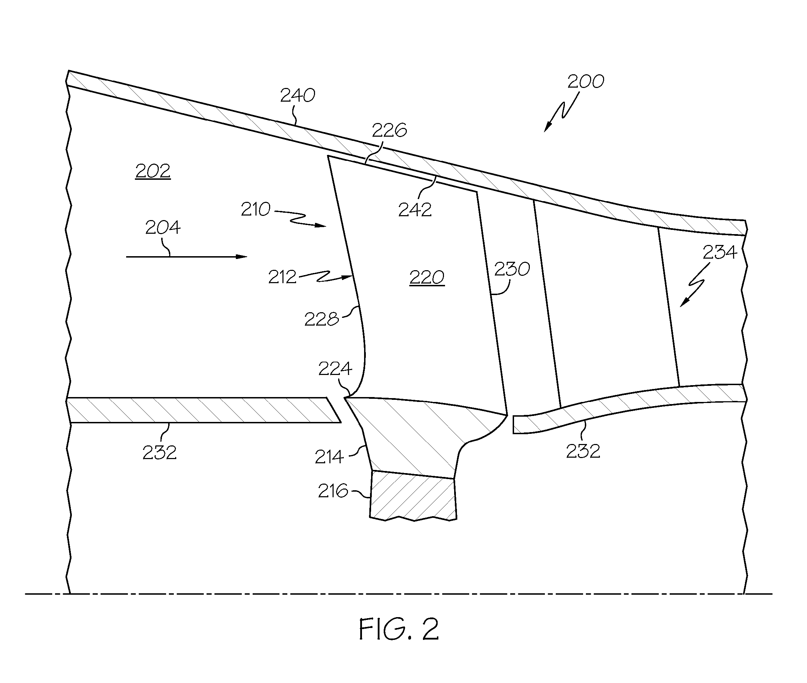

FIG. 2 is a partial cross-sectional view of a compressor 200 that may be incorporated, for example, into the compressor section 130 discussed above in reference to FIG. 1 or other types of compressor applications. In one exemplary embodiment, the compressor 200 is an axial compressor, although aspects of the exemplary embodiments discussed herein may also be applicable to other types of compressors, such as centrifugal compressors.

In the depicted embodiment, the compressor 200 includes one or more rotor assemblies 210 that each include a number of rotor blades 212 (one of which is shown) mounted on platform 214, which in turn, is coupled to a hub 216 mounted on a shaft (not shown). The rotor blades 212 extend in a radial direction and are generally spaced apart from one another around the circumference of the hub 216. As also described in more detail below, each rotor blade 212 includes a generally concave, pressure sidewall 220 and a circumferentially opposite, generally convex suction sidewall (not shown). The two sidewalls extend radially between a root 224 and an outer tip 226 and axially between a leading edge 228 and a trailing edge 230. In general, the rotor blade 212 is typically solid and has a plain, generally flat tip 226, although other configurations may be provided.

The compressor 200 further includes one or more stator assemblies with stator vanes 234 (one of which is shown) mounted a platform 232. A generally circumferentially arcuate casing 240 surrounds the rotor blades 212 and stator vanes 234 to at least partially define the primary (or compressor mainstream) air flow path 202 with the platforms 214 and 232. The portion of casing 240 that is in closest proximity to the tip 226 is referred to as an end wall 242. During operation, the rotor blades 212 rotate with the platform 214 and hub 216 and draw primary (or mainstream) air flow 204 through the compressor 200. As the primary air flow 204 travels axially downstream between the rotor blades 212 and the stator vanes 234, it is pressurized and directed through additional compressor or fan stages, as desired, for further compression. Although not shown, the compressor 200 may additionally include secondary air flow systems and/or bleed flow systems that remove or inject air for pneumatic power or cooling.

As mentioned above, a stall margin associated with the compressor 200 corresponds to the difference in the mass flow rate and pressure rise of the primary air flow 204 between normal operating conditions and stall operating conditions. It is generally desirable to increase stability, either to enable higher performance normal operating conditions or to increase the margin of safety for existing conditions. An example of a compressor scenario that may contribute to a stall condition is pressure variation or distortion along the primary air flow path 202. Such pressure variations may arise in a number of contexts. For example, air flow across the rotor blades 212 may be subject to vortices or other flow distortions that reduce flow momentum of the boundary layer, thus reducing pressure and increasing the likelihood of an undesirable stall. As described below, the rotor blades 212 may be configured to improve the stall margins.

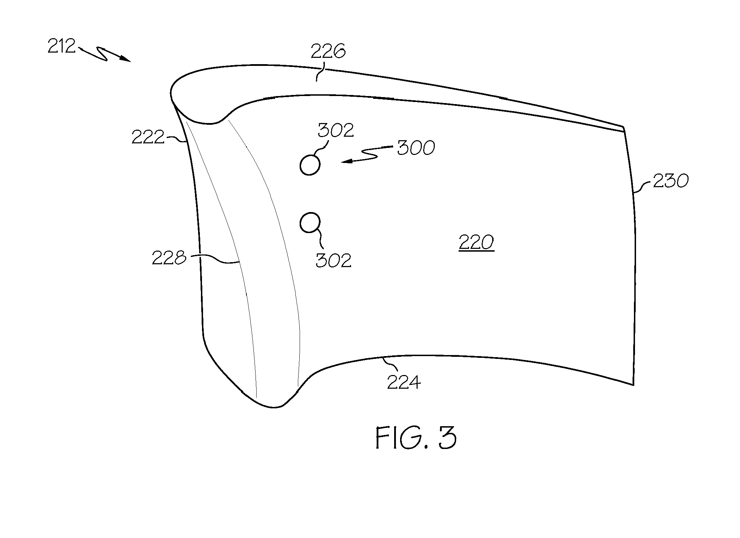

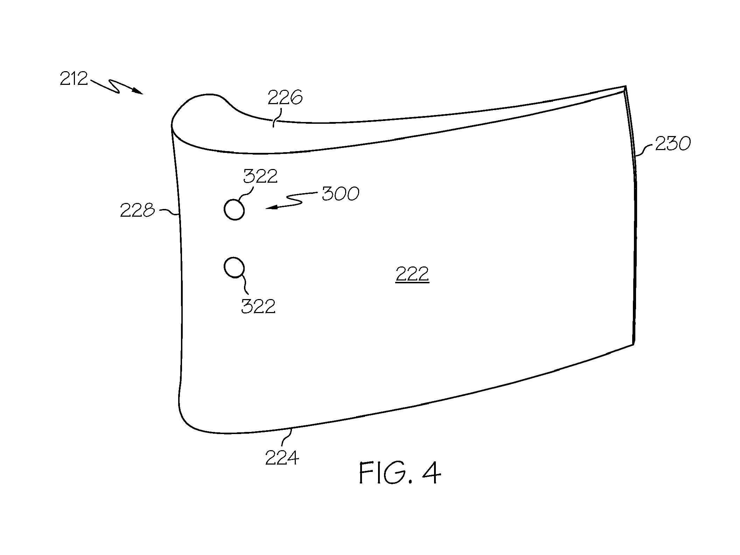

FIG. 3 is a pressure side view of a compressor blade of a compressor section, such as the rotor blade 212 of FIG. 2 in accordance with an exemplary embodiment, and FIG. 4 is a second side view of a compressor blade of the compressor section, such as the rotor blade 212 of FIG. 2 in accordance with an exemplary embodiment. As noted above, the rotor blade 212 includes the generally concave, pressure sidewall 220 and generally convex, suction sidewall 222, joined at the leading edge 228 and trailing edge 230, and extending in a radial direction from the root 224 to the tip 226.

As noted above, boundary layer separation (e.g., separation of the local, primary air flow over a blade surface) may result in flow distortions that contribute to a stall condition. One potential area of boundary layer separation is on the suction sidewall 222.

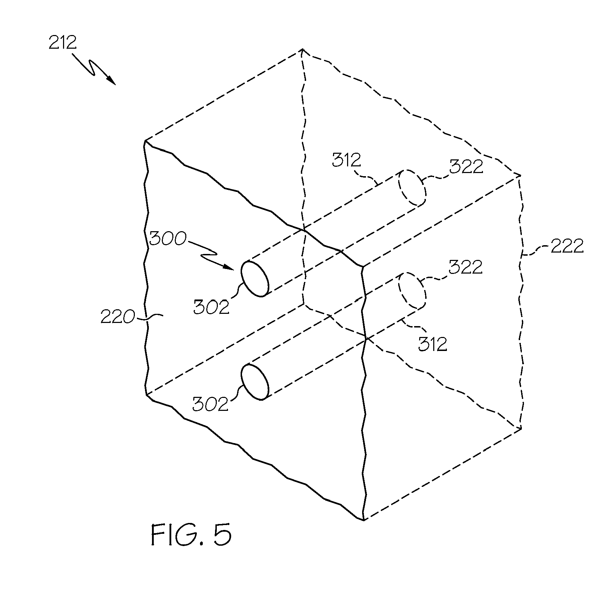

In accordance with an exemplary embodiment, the rotor blade 212 may include one or more through holes 300 that function to prevent and/or mitigate boundary layer separation on the suction sidewall 222. As shown in FIGS. 3 and 4, the holes 300 may include a first hole and a second hole, although any number of holes 300 may be provided, including a single hole. Further details of the holes 300 are provided below with additional reference to FIG. 5, which is a partial, more detailed view of the holes 300.

Now referring to FIGS. 3-5, the holes 300 are generally configured to remove air flow at the pressure sidewall 220, direct the air through the rotor blade 212, and inject the air flow at the suction sidewall 222. As described below, the air flow through the holes 300 may function to energize existing, local air flow on the suction sidewall 222 to thereby prevent or mitigate boundary layer separation, and as a result, stall inception.

In general, each hole 300 may include an inlet 302 formed on the pressure sidewall 220, a body 312 extending through the rotor blade 212, and an outlet 322 formed on the suction sidewall 222. In one exemplary embodiment, the inlets 302 and outlets 322 are circular, although any shape may be provided, including oval and/or elliptical. Similarly, in the depicted exemplary embodiment, each body 312 may have a circular cross-sectional shape to result in a cylindrical body shape. However, in other exemplary embodiments, other shapes may be provided. As also shown in FIG. 5, the body 312 is generally straight. In other embodiments, the body 312 may be curved or have compound sections. In the depicted exemplary embodiment, the holes 300 have a constant cross-sectional area. However, the cross-sectional area and/or shape may be varied. In general, the holes 280 may have any suitable configuration, as well as any suitable height, width, length, separation, and cross-sectional shape (not shown). In general, the hole 300 is configured to facilitate air flow through the inlet 302 and body 312 such that the air is directed through the outlet 322 at a pressure, velocity, and orientation that energizes the boundary layer. In general, dimensions and shapes may be machine dependent as well as dependent on stall characteristics of the machine.

The holes 300 may be angled or otherwise extend to remove air from a first predetermined location on the pressure sidewall 220 and inject air at a second predetermined location on the suction sidewall 222. In particular, the first predetermined location on the pressure sidewall 220 may be an area suitable for flow removal, and the second predetermined location on the suction sidewall 222 may be an area with a potential for flow separation, particularly the inception of flow separation. In the depicted exemplary embodiment, the inlets 302 of the holes 300 are positioned in the vicinity of the leading edge 228 and arranged in a generally radial line, while the outlets 322 of the holes 300 are also positioned in the vicinity of the leading edge 228, although slightly aft of the inlets 302, also arranged in a generally radial line.

Although the description above refers to the inlet 302 on the pressure sidewall 220 and outlet 322 on the suction sidewall 222, the position of the inlet and outlet may be reversed in some embodiments. In other words, the inlet may be formed in the suction sidewall 222 and the outlet may be formed in the pressure sidewall 220, thereby resulting in air flow from the suction sidewall to the pressure sidewall. In general, the characterization of the inlet and outlet is dependent on the local relative pressure of each side, e.g., at times, portions of the suction sidewall may have a higher pressure than the pressure sidewall. The hole, if extending from higher pressure region on the pressure sidewall to lower pressure region in the suction sidewall, may result in energizing the boundary layer flow in the suction sidewall, which may be referred to as "boundary layer injection." The hole, if extending from a lower pressure on pressure sidewall to higher pressure suction sidewall, may result in low momentum boundary layer flow from the suction side being sucked towards the pressure sidewall, which may be referred to as "boundary layer suction." The choice to use boundary layer suction or injection may depend on the designer as well as manufacturing constraint.

The predetermined locations and other design considerations may be determined, for example, by with CFD analysis. In general, the particular dimensions and arrangement of the holes 300 are selected in order to obtain the desired performance, stall margin characteristics, and durability.

With respect to performance, as a general matter, air passing through the holes 300 is not being compressed by the rotor blade 212, thus resulting in at least some loss of theoretical efficiency. However, the improvement in stall margin may counteract any loss of efficiency. As an example, one exemplary embodiment resulted in an efficiency penalty of 1% and a stall margin improvement of 7%, thereby resulting in an overall positive result.

With respect to durability, the holes 300 may be sized so as to maintain the structural integrity of the rotor blade 212 at the predetermined load conditions. In many embodiments, the holes 300 do not have an adverse impact on the mechanical stability of the rotor blade 212.

In general, the rotor blade 212 may be manufactured from any suitable material, including, for example, a nickel-based alloy. Similarly, the rotor blade 212 may be manufactured according to any suitable technique or process, including casting or additive manufacturing techniques.

As such, exemplary embodiments discussed herein provide rotor blades that that improve stall margin. This enables a higher efficiency operation at higher pressures and/or enhanced safety. The rotor blades improve efficiency with through holes that address boundary layer separation and flow variations along the suction sidewall, thereby providing improvements while reducing cost and complexity of manufacturing, installing, and maintaining engines used in aircrafts and other platforms that require compression. In some applications, the holes may enable increased performance without requiring tip treatments and/or more complicated injection schemes. However, these mechanisms may be used in conjunction with the rotor blades discussed above.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A rotor blade (212) for a compressor (200), comprising:
a pressure sidewall (220);
a suction sidewall (222) coupled to the pressure sidewall (220) at a leading edge (228) and a trailing edge (230); and
a through hole (300) extending between the pressure sidewall (220) and the suction sidewall (222).

2. The rotor blade (212) of claim 1, wherein the through hole (300) includes an inlet (302) on the pressure sidewall (220) and an outlet (322) on the suction sidewall (222).

3. The rotor blade (212) of claim 2, wherein the through hole (300) includes a body (312) extending between the inlet (302) and the outlet (322).

4. The rotor blade (212) of claim 3, wherein the body (312) has a generally circular cross-sectional shape.

5. The rotor blade (212) of claim 4, wherein the inlet (302) and outlet (322) each has a generally circular cross-sectional shape.

6. The rotor blade (212) of claim 1, wherein the through hole (300) is configured to bleed air from the pressure sidewall (220) and inject the air at the suction sidewall (222).

7. The rotor blade (212) of claim 1, wherein the through hole (300) is a first through hole (300) and wherein the rotor blade (212) further comprises at least one additional through hole (300) extending between the pressure sidewall (220) and the suction sidewall (222).

8. The rotor blade (212) of claim 1, wherein the through hole (300) is generally straight.
